**Europäisches Patentamt**

**European Patent Office**

**Office européen des brevets**

(19)

(11) Numéro de publication : **0 251 835**
**B1**

(12)

# FASCICULE DE BREVET EUROPÉEN

(45) Date de publication du fascicule du brevet :
**13.12.89**

(51) Int. Cl.⁴ : **F 02 F   1/42**

(21) Numéro de dépôt : **87401175.2**

(22) Date de dépôt : **25.05.87**

(54) **Culasse de moteur à combustion interne à trois soupapes par cylindre et à forte pression dans les cylindres.**

(30) Priorité : **04.07.86 FR 8609775**

(43) Date de publication de la demande :
**07.01.88 Bulletin 88/01**

(45) Mention de la délivrance du brevet :
**13.12.89 Bulletin 89/50**

(84) Etats contractants désignés :
**AT DE GB IT**

(56) Documents cités :
**FR--A-- 1 116 185**
**FR--A-- 1 264 423**
**FR--A-- 2 084 321**
**FR--A-- 2 105 641**
**FR--A-- 2 142 618**
**FR--A-- 2 562 162**
**US--A-- 2 380 066**
**US--A-- 4 369 627**

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Le Creurer, Maurice**
**77, rue Maréchal Foch**
**F-95150 Taverny (FR)**

(74) Mandataire : **Polus, Camille et al**
**c/o Cabinet Lavoix 2, Place d'Estienne d'Orves**
**F-75441 Paris Cedex 09 (FR)**

**EP 0 251 835 B1**

## Description

L'invention concerne un moteur à combustion interne à plusieurs cylindres subissant une forte pression en service, comportant trois soupapes par cylindre, deux soupapes d'admission et une soupape d'échappement. Cette disposition a été reconnue comme particulièrement intéressante dans le cas des moteurs à allumage par compression.

Dans une demande de brevet français FR-A-2 562 162 déposée par les Demanderesses, on a proposé un moteur à trois soupapes par cylindre dont le conduit d'échappement débouche, pour chacun des cylindres, sur la même face latérale de la culasse que les conduits d'admission et à un niveau intermédiaire entre les conduits d'admission et le plan du joint de culasse. Les conduits d'admission sont de plus symétriques par rapport à un plan diamétral du cylindre perpendiculaire au plan longitudinal du moteur, c'est-à-dire au plan contenant les axes des cylindres successifs.

Grâce à cette disposition, la face latérale de la culasse opposée à la face sur laquelle débouchent les conduits d'échappement et d'admission est parfaitement dégagée, ce qui laisse toute latitude pour l'implantation d'une préchambre de combustion munie d'un injecteur et d'une bougie de préchauffage. De plus, cette disposition permet de réaliser une distribution particulièrement simple et compacte à partir d'un seul arbre à came en tête, les soupapes étant actionnées par des linguets identiques.

Dans la disposition décrite dans le brevet précité, les axes des conduits d'échappement sont contenus chacun dans le plan diamétral de symétrie des conduits d'admission correspondants. La fixation d'une telle culasse sur le bloc moteur, au niveau de chacun des cylindres, est assurée par quatre vis réparties autour du cylindre, aux quatre sommets d'un rectangle entourant ce cylindre.

Dans le cas de moteurs dont les cylindres subissent de fortes pressions en service, il serait souhaitable d'augmenter le nombre de vis par cylindre, tout en les disposant le plus régulièrement possible autour du cylindre. La disposition du conduit d'échappement avec son axe suivant le plan diamétral de symétrie interdit de placer une vis, au voisinage de la face latérale où débouchent les conduits, et suivant ce plan diamétral. L'intérêt de cette solution est donc limité par l'impossibilité où l'on se trouve d'augmenter le nombre de vis de fixation de la culasse, tout en maintenant une bonne répartition de ces vis autour du cylindre, dans le cas d'un moteur à forte pression dans les cylindres.

Le but de l'invention est donc de proposer une culasse de moteur à combustion interne à plusieurs cylindres dont les axes sont contenus dans un plan longitudinal, chaque cylindre comprenant deux soupapes d'admission coopérant chacune avec un conduit d'admission et une soupape d'échappement coopérant avec un conduit d'échappement, les conduits d'admission étant symétriques l'un de l'autre par rapport au plan diamétral du cylindre perpendiculaire au plan longitudinal, le conduit d'échappement débouchant sur la même face latérale de la culasse que les conduits d'admission et à un niveau intermédiaire entre le niveau des conduits d'admission et le joint de culasse et la culasse étant fixée sur le bloc moteur, au niveau de chacun des cylindres, par un ensemble de vis réparties autour du cylindre, cette culasse devant permettre un serrage efficace sur le bloc moteur, en particulier dans le cas d'un moteur à forte pression dans les cylindres.

Dans ce but, les conduits d'échappement débouchent sur la face latérale de la culasse en des positions décalées latéralement par rapport au plan diamétral de symétrie des conduits d'admission correspondants, ces conduits d'échappement présentant des axes dont la projection sur un plan parallèle au joint de culasse est de forme courbe et tourne sa concavité vers le plan diamétral et une vis de fixation de la culasse est disposée au voisinage de la face latérale de la culasse, avec son axe suivant le plan diamétral de symétrie, dans l'espace situé à l'intérieur de la concavité du conduit d'échappement.

Afin de bien faire comprendre l'invention, on va maintenant décrire, à titre d'exemples non limitatifs, en se référant aux figures jointes en annexe, une culasse à trois soupapes par cylindre selon la demande de brevet précitée et, à titre de comparaison, la disposition du conduit d'échappement et des vis de fixation d'une culasse suivant l'invention.

Dans ces figures :

— la Figure 1 est une vue en plan d'une partie d'une culasse selon la demande de brevet précitée ;

— la Figure 2 est une coupe suivant 2-2 de la figure 1 ;

— la Figure 3 est une coupe suivant 3-3 de la figure 1 ;

— la Figure 4 est une coupe suivant 4-4 de la figure 2 ;

— la Figure 5 est une vue de face en élévation de la face latérale sur laquelle débouchent les conduits d'échappement et d'admission d'une culasse suivant l'invention ;

— la Figure 6 est une vue en coupe analogue à la figure 4, dans le cas d'une culasse suivant l'invention et suivant un premier mode de réalisation ;

— la Figure 7 est une vue en coupe partielle et en élévation, analogue à la figure 2, dans le cas d'une culasse suivant l'invention et suivant un second mode de réalisation ;

— les Figures 8, 9, 10, 11 et 12 sont des vues en coupe analogues à la vue de la figure 6 montrant différentes variantes du second mode de réalisation de l'invention.

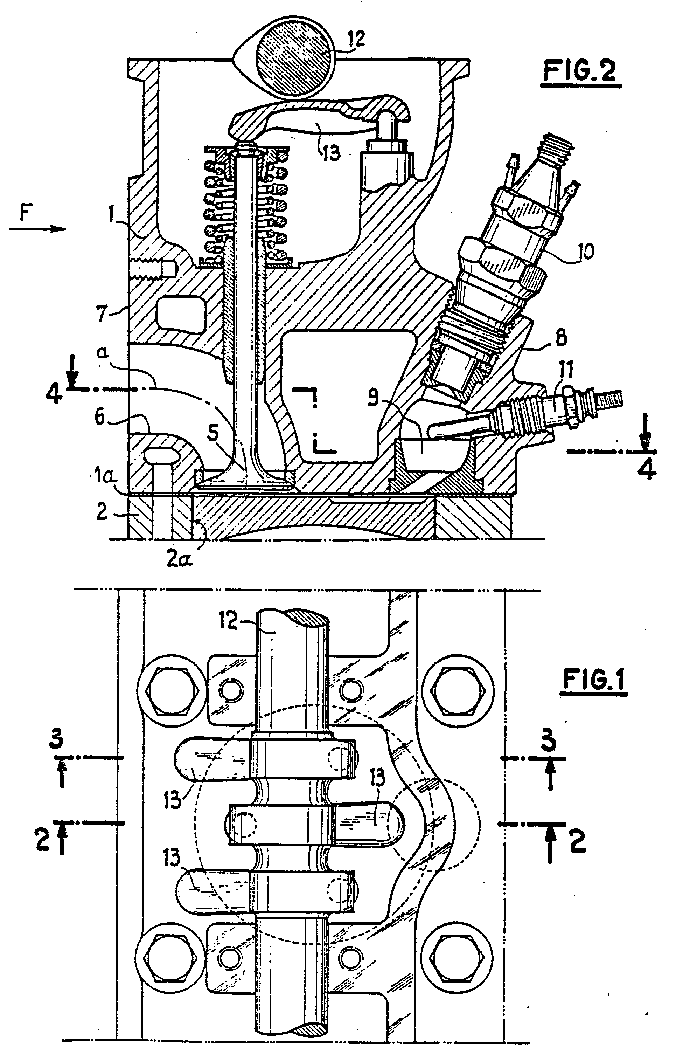

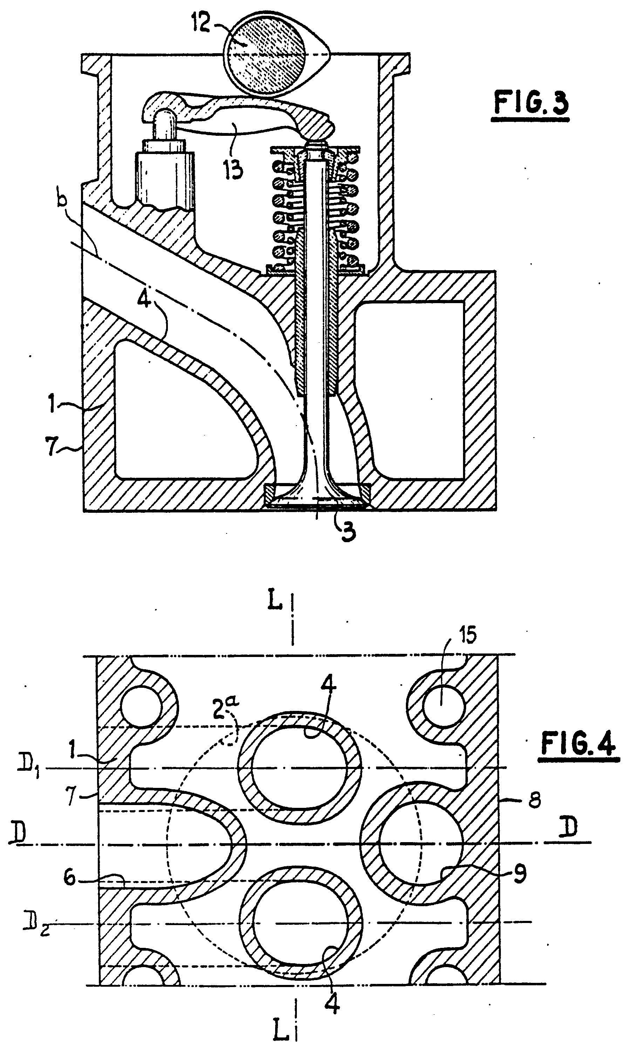

Les figures 1 à 4 représentent une partie d'une culasse 1 d'un moteur à combustion interne à allumage par compression suivant le brevet précité des Demanderesses. Le bloc moteur 2 délimite plusieurs cylindres tels que 2a dont les axes sont contenus dans un plan longitudinal L. Pour chaque cylindre, deux soupapes d'admission 3 coopèrent chacune avec un conduit d'admission 4 et une soupape d'échappement 5 coopère avec un conduit d'échappement 6. L'axe a du conduit d'échappement 6 est contenu dans le plan diamétral D du cylindre 2 perpendiculaire au plan longitudinal L. Les conduits d'admission 4 du cylindre 2 sont symétriques l'un de l'autre par rapport au plan diamétral D. Comme il est visible sur les figures 2 et 3, le conduit d'échappement 6 débouche sur la même face latérale 7 que les deux conduits d'admission 4 correspondants et le conduit d'échappement 6 débouche sur cette face 7 à un niveau intermédiaire entre le niveau auquel débouchent les conduits d'admission et le plan 1a du joint de la culasse 1.

Grâce à la disposition représentée, la face latérale 8 de la culasse opposée à la face 7 est parfaitement dégagée, ce qui permet l'implantation d'une préchambre de combustion 9 munie d'un injecteur 10 et d'une bougie de préchauffage 11. On voit également que cette disposition permet de réaliser une distribution extrêmement simple et compacte, à partir d'un seul arbre à came en tête 12 disposé à égale distance des axes des soupapes d'échappement et d'admission qui sont toutes actionnées par des linguets 13 identiques.

On voit sur la figure 4 qu'autour du cylindre 2 sont prévus, au voisinage des faces latérales 7 et 8, quatre trous 15 de passage de vis disposés aux quatre sommets d'un rectangle centré par rapport à la section du cylindre 2. Il est parfaitement visible sur la figure 4, que la disposition représentée ne permet pas d'augmenter le nombre de trous de passage pour les vis de fixation de la culasse autour du cylindre 2, en prévoyant de tels trous de passage 15 disposés avec leur axe suivant le plan de symétrie D. Une telle disposition n'est donc pas appropriée au cas de moteurs à forte pression.

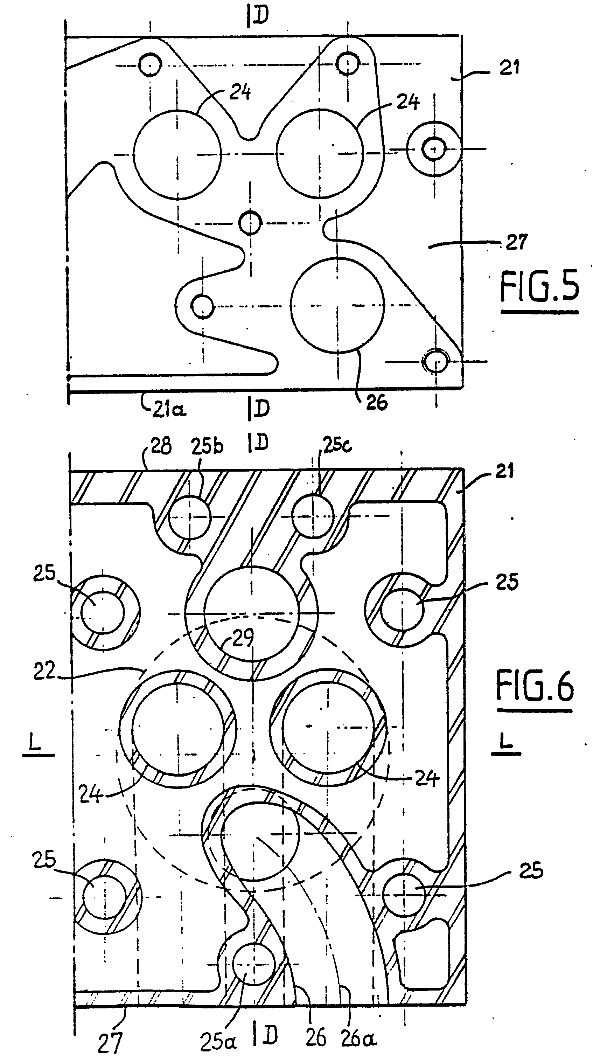

Sur la figure 5, on voit la face latérale 27 d'une culasse suivant l'invention, analogue à la face 7 de la culasse représentée sur les figures 1 à 4, sur laquelle débouchent le conduit d'échappement 26 et les conduits d'admission 24 associés à un cylindre du moteur. Les conduits 24 sont symétriques par rapport au plan diamétral D du cylindre 22 perpendiculaire au plan longitudinal L du moteur (figure 6). Il est également visible sur les figures 5 et 6 que l'axe 26a du conduit d'échappement 26 n'est plus situé dans le plan D, comme dans la disposition selon l'art antérieur décrite en référence aux figures 1 à 4. Le conduit 26 débouche sur la face latérale 27, dans une position décalée latéralement par rapport au plan diamétral D et à un niveau intermédiaire entre le niveau des conduits d'admission 24 et le plan 21a du joint de la culasse 21. Cette position du conduit d'échappement 26 est très légèrement à droite, c'est-à-dire vers l'extérieur d'une position à l'aplomb du conduit d'admission 24 situé à droite sur la face 27.

Ce conduit d'échappement pourrait être, de manière alternative, décalé vers la gauche et situé sensiblement à l'aplomb du conduit d'admission 24 situé à gauche.

Sur la figure 6, on voit que l'axe 26a du conduit d'admission 26 présente, en projection sur un plan parallèle au plan du joint de culasse 21a, c'est-à-dire sur un plan horizontal, la forme d'une courbe dont la concavité est dirigée vers le plan diamétral D. Cet axe 26a présente bien entendu, comme dans le cas de l'art antérieur, également une courbure en projection sur un plan vertical tel que le plan de coupe de la figure 2. La forme du conduit 26 permet de prévoir un trou 25a pour le passage d'une vis de fixation de la culasse 21 au voisinage de la face latérale 27 et suivant le plan diamétral D. Le trou de passage 25a est disposé dans l'espace situé à l'intérieur de la concavité du conduit d'échappement 26.

La disposition des conduits d'admission et d'échappement qui débouchent sur la face 27 permet de disposer une préchambre 29 vers l'intérieur de la culasse et au voisinage de la face latérale 28 opposée à la face 27. Des trous de passage de vis 25c et 25b sont usinés de façon symétrique par rapport au plan diamétral D dans la surépaisseur correspondante de la paroi de la culasse. De plus, comme dans la disposition de l'art antérieur, quatre trous de passage de vis 25 sont disposés aux quatre sommets d'un rectangle entourant le cylindre 22. On dispose donc de sept trous de passage de vis à peu près régulièrement répartis autour du cylindre 22 pour la fixation de la culasse au niveau de ce cylindre. Ce nombre considérablement accru de vis à peu près régulièrement réparties permet de supporter de très fortes pressions dans la chambre du cylindre 22.

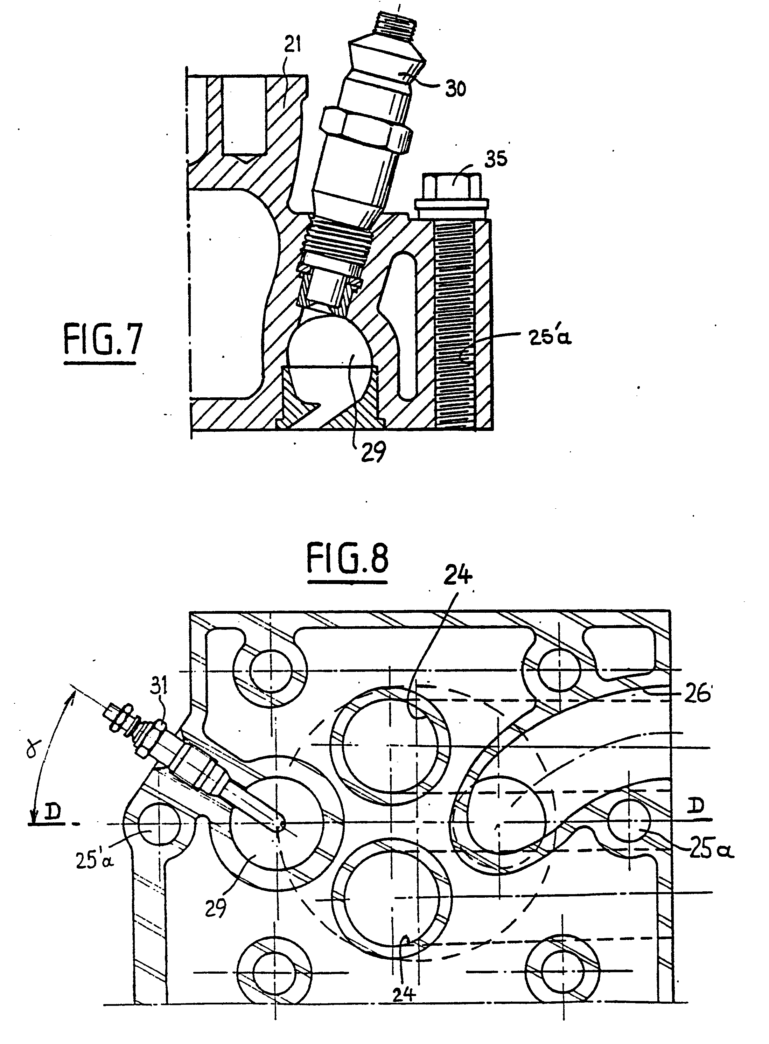

Comme il est visible sur la figure 7 et sur l'une quelconque des figures 8 à 12, il est également possible de réaliser une fixation de la culasse 21, au niveau du cylindre 22 par un ensemble de six vis à peu près régulièrement réparties autour de ce cylindre. Comme dans le cas du mode de réalisation représenté sur la figure 6, le décalage latéral et la forme courbe du conduit d'échappement 26 permettent de prévoir un trou de passage de vis 25a suivant le plan diamétral D, au voisinage de la face latérale 27 et dans la concavité du conduit 26. Comme il est visible sur la figure 7, une vis 35 traverse la culasse par une ouverture de passage 25'a située suivant le plan diamétral D, au voisinage de la face 28 et dans une position pratiquement symétrique de celle du trou de passage 25a, par rapport à l'axe du cylindre 22. La fixation à six vis par cylindre est complétée grâce à quatre trous de passage 25 disposés suivant les sommets d'un rectangle centré par rapport au cylindre 22.

Dans toutes les variantes de disposition représentées sur les figures 8 à 12, la position et la forme du conduit d'échappement 26 sont identiques, ce conduit courbe en projection horizontale et verticale débouchant sur la face latérale 27 en une position décalée latéralement par rapport au plan diamétral D.

Les variantes représentées diffèrent par la position angulaire du trou de passage 25'a de la vis 30, de l'axe de la préchambre 29 et de la bougie de préchauffage 31, par rapport au plan D.

L'axe de la chambre 29 est défini comme la trace du plan de symétrie de la chambre et de l'injecteur 30 sur un plan parallèle au plan 21a du joint de culasse, tel que le plan des figures 8 à 12.

Une première variante (figures 8, 9 et 10) est caractérisée par une disposition de l'axe du trou de passage 25'a dans le plan diamétral D, c'est-à-dire dans une position qui est sensiblement diamétralement opposée par rapport à la position de l'axe du trou 25a.

Pour accommoder la position du trou de passage 25'a avec celle de la chambre de combustion 29 et de sa bougie de préchauffage 31, plusieurs solutions sont possibles ; ces solutions correspondent aux sous-variantes des figures 8, 9 et 10.

Sur la figure 8, l'axe du trou de passage 25'a et l'axe de la chambre 29 sont contenus dans le plan diamétral D, l'axe de la bougie de préchauffage 31 faisant un angle $\alpha$ avec ce plan.

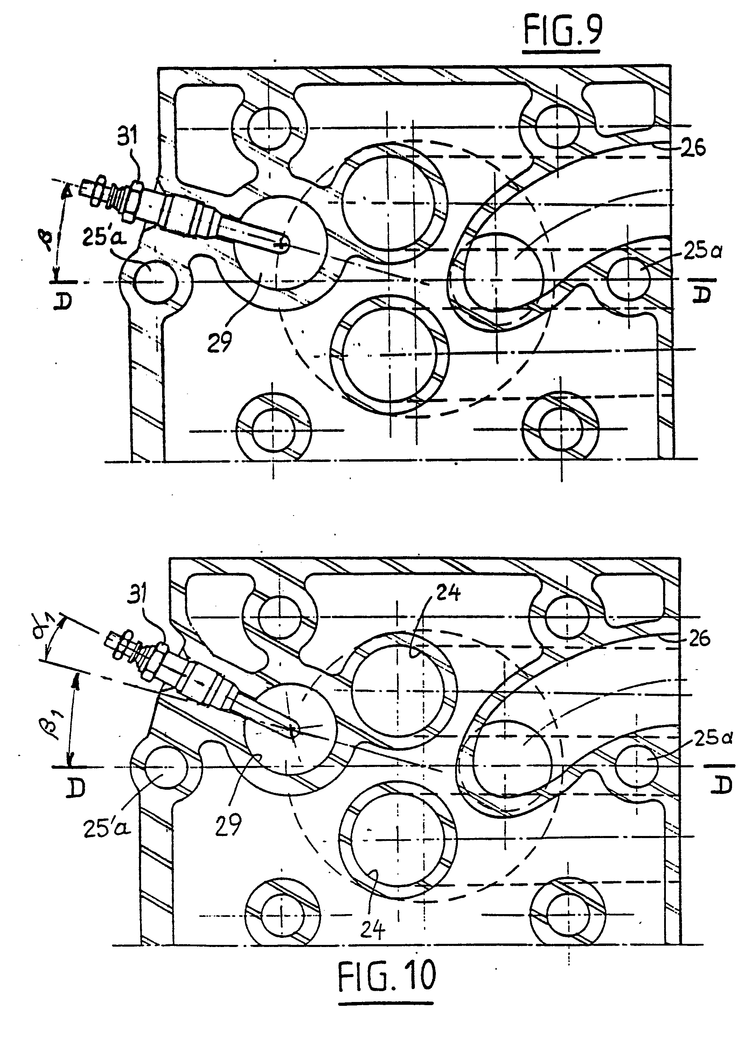

Sur la figure 9, l'axe de la chambre 29 et la bougie de préchauffage 31 font un angle $\beta$ avec le plan diamétral D.

Sur la figure 10, l'axe de la chambre 29 fait un angle $\beta_1$, inférieur à l'angle $\beta$ de la sous-variante représentée sur la figure 9 avec le plan D, et la bougie de préchauffage 31 fait un angle $\alpha_1$ avec l'axe de la chambre 29, inférieur à l'angle $\alpha$ de la sous-variante représentée sur la figure 8.

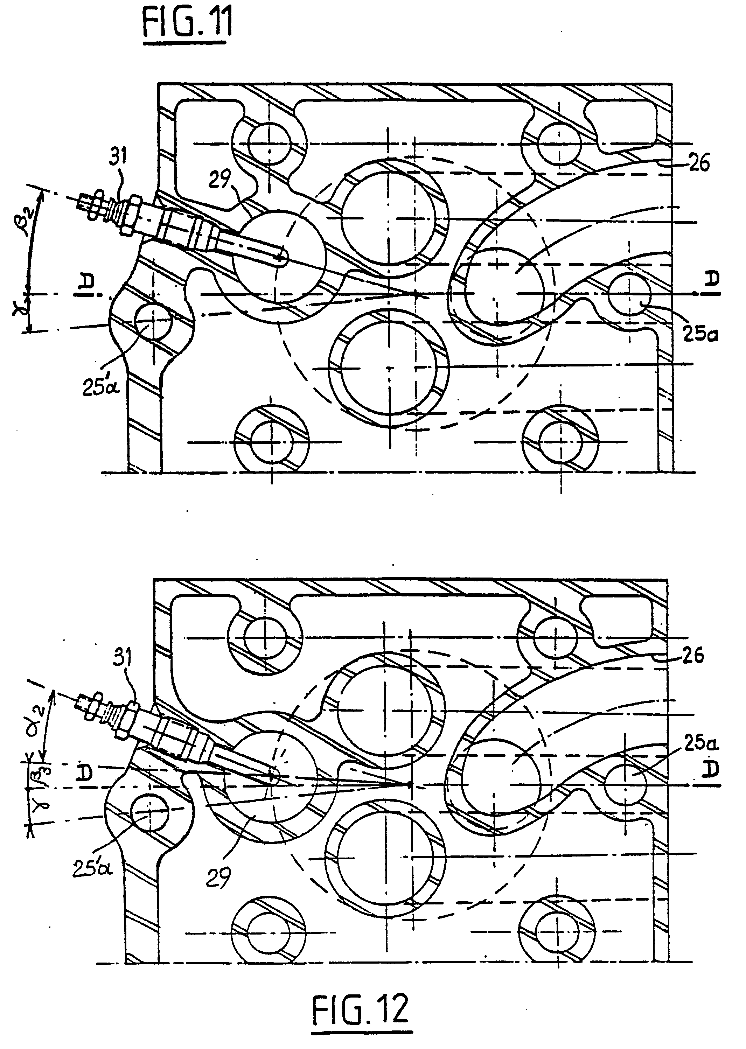

Une seconde variante représentée sur les figures 11 et 12 consiste à disposer l'axe du trou de passage 25'a en dehors du plan diamétral D, dans une position faisant un angle $\gamma$ avec le plan D, vu depuis l'axe du cylindre 22.

Dans la sous-variante représentée sur la figure 11, l'axe de la préchambre 29 et l'axe de la bougie de préchauffage 31 font un même angle $\beta_2$ avec le plan diamétral D.

Dans la sous-variante représentée sur la figure 12, l'axe de la chambre 29 fait un angle $\beta_3$ avec le plan diamétral D, cet angle $\beta_3$ étant inférieur à l'angle $\beta_2$ de la sous-variante représentée sur la figure 11. La bougie de préchauffage 31 est décalée d'un angle $\alpha_2$ par rapport à l'axe de la préchambre 29.

Dans tous les cas, en plus des avantages de la disposition selon l'art antérieur qui sont intégralement maintenus, la disposition suivant l'invention permet d'obtenir un serrage et une fixation améliorés de la culasse par une augmentation notable du nombre de vis de fixation autour de chaque cylindre, ces vis de fixation restant à peu près régulièrement réparties autour du cylindre. Cette amélioration est obtenue grâce à une forme courbe et à un décalage latéral du conduit d'échappement.

On peut imaginer d'autres dispositions relatives du trou de passage de vis voisin de la préchambre de combustion, de cette préchambre et de sa bougie de préchauffage, par rapport au plan diamétral du cylindre perpendiculaire au plan longitudinal L.

## Revendications

1. Culasse de moteur à combustion interne à plusieurs cylindres dont les axes sont contenus dans un plan longitudinal L, chaque cylindre comprenant deux soupapes d'admission coopérant chacune avec un conduit d'admission (24) et une soupape d'échappement coopérant avec un conduit d'échappement (26), les conduits d'admission (24) étant symétriques l'un de l'autre par rapport au plan diamétral D du cylindre (22), perpendiculaire au plan longitudinal L, le conduit d'échappement (26) débouchant sur la même face latérale (27) de la culasse (21) que les conduits d'admission (24) et a un niveau intermédiaire entre le niveau des conduits d'admission (24) et le plan (1a) du joint de culasse et la culasse (21) étant fixée sur le bloc moteur, au niveau de chacun des cylindres (21) par un ensemble de vis réparties autour du cylindre (22), caractérisée par le fait que les conduits d'échappement (26) débouchent sur la face latérale (27) de la culasse, en des positions décalées latéralement par rapport au plan diamétral D de symétrie des conduits d'admission (24) correspondants, ces conduits d'échappement (26) présentant des axes (26a) dont la projection sur un plan parallèle au plan (1a) du joint de culasse est de forme courbe et tourne sa concavité vers le plan diamétral D et qu'un trou (25a) de passage de vis de fixation de la culasse est disposé au voisinage de la face latérale (27) avec son axe suivant le plan diamétral D, dans l'espace situé à l'intérieur de la concavité du conduit d'échappement (26).

2. Culasse suivant la revendication 1, caractérisée par le fait qu'elle comporte, à peu près régulièrement répartis autour de chaque cylindre (22) sept trous de passage de vis, dont le trou (25a) situé dans la concavité du conduit d'échappement (26) et deux trous (25b, 25c) disposés de part et d'autre du plan diamétral D au voisinage de la face latérale (28) de la culasse opposée à la face (27) sur laquelle débouchent les conduits d'échappement (26) et d'admission (24).

3. Culasse suivant la revendication 1, caractérisée par le fait qu'elle comporte six trous de passage de vis de fixation à peu près régulièrement répartis autour de chacun des cylindres (22), dont une ouverture (25'a) disposée au voisinage de la face latérale (28) opposée à la face (27) sur laquelle débouchent les conduits d'échappement (26) et d'admission (24) et à proximité d'une préchambre de combustion (29) munie d'un injecteur (30) et d'une bougie de préchauffage (31).

4. Culasse suivant la revendication 3, caractérisée par le fait que l'ouverture (25'a) pour passage de vis de fixation voisine de la face latérale (28) opposée à la face (27) sur laquelle débouchent les conduits d'échappement (26) et d'admission (24), est disposée avec son axe suivant le plan diamétral D perpendiculaire au plan longitudinal L du moteur, dans une position sensiblement symétrique par rapport à l'axe du cylindre (22) de la position du trou de passage (25a) situé dans l'espace à l'intérieur de la concavité du conduit d'échappement (26).

5. Culasse suivant la revendication 4, caractérisée par le fait que l'axe de la préchambre (29) est disposé suivant le plan diamétral D, l'axe de la bougie de préchauffage (31) faisant un certain angle $\alpha$ avec ce plan.

6. Culasse suivant la revendication 4, caractérisée par le fait que l'axe de la préchambre (29) et l'axe de la bougie de préchauffage (31) font un même angle $\beta$ avec le plan diamétral D.

7. Culasse suivant la revendication 4, caractérisée par le fait que l'axe de la préchambre (29) fait un premier angle $\beta_1$ avec le plan diamétral D et que l'axe de la bougie de préchauffage (31) fait un second angle $\alpha_1$ avec l'axe de la préchambre (29).

8. Culasse suivant la revendication 1, caractérisée par le fait que l'axe de l'ouverture de passage de vis (25'a) disposée au voisinage de la face latérale (28) de la culasse (21) opposée à la face latérale (27) sur laquelle débouchent le conduit d'échappement (26) et les conduits d'admission (24) est disposé à l'extérieur du plan diamétral D et à proximité de ce plan et d'une préchambre de combustion (29) munie d'un injecteur (30) et d'une bougie de préchauffage (31).

9. Culasse suivant la revendication 8, caractérisée par le fait que l'axe de la préchambre (29) et de l'axe de la bougie de préchauffage (31) font un même angle $\beta_2$ avec le plan diamétral D.

10. Culasse suivant la revendication 8, caractérisée par le fait que l'axe de la préchambre (29) fait un premier angle $\beta_3$ avec le plan diamétral D et l'axe de la bougie de préchauffage (31) un second angle $\alpha_2 + \beta_3$ avec ce plan diamétral D.

11. Culasse suivant la revendication 1, caractérisée par le fait que le conduit d'échappement (26) débouche sur la face latérale (27) de la culasse où débouchent également les conduits d'admission (24), dans une position située sensiblement à l'aplomb d'une des deux conduites d'admission (24).

## Claims

1. Cylinder head for an internal combustion engine with several cylinders, whose axes are contained in a longitudinal plane (L) each cylinder having two induction valves, each cooperating with an induction pipe (24) and an exhaust valve cooperating with an exhaust pipe (26), the induction pipes (24) being symmetrical to one another with respect to the diametral plane (D) of the cylinder (22) perpendicular to the longitudinal plane (L), the exhaust pipe (26) issuing onto the same lateral face (27) of the cylinder head (21) as the induction pipes (24) and at an intermediate level between that of the induction pipes (24) and the head gasket and the cylinder head (21) being fixed to the power unit level with each of the cylinders (22) by a plurality of screws distributed around the cylinder (22), characterized in that the exhaust pipes (26) issue onto the lateral face (27) of the cylinder head in positions laterally displaced with respect to the diametral plane (D) of symmetry of the corresponding induction pipes (24), the exhaust pipes (26) having axes (26a), whose projection on a plane (1a) parallel to the head gasket is curved and has its concavity turned towards the diametral plane (D) and a cylinder head fixing screw is positioned in the vicinity of the lateral face (27) of the cylinder head, with its axis following the diametral plane (D) of symmetry, in the space located within the concavity of the exhaust pipe (26).

2. Cylinder head according to claim 1, characterized in that it has, roughly regularly distributed about each cylinder (22), seven screw passage holes, hole (25a) being located in the concavity of exhaust pipe (26), whilst two holes (25b, 25c) are located on either side of the diametral plane (D) in the vicinity of the lateral face (28) of the cylinder head opposite to face (27) onto which issue the exhaust (26) and induction (24) pipes.

3. Cylinder head according to claim 1, characterized in that it has six fixing screw passage holes roughly regularly distributed about each of the cylinders (22), one opening (25'a) being located in the vicinity of the lateral face (28) opposite to face (27) onto which issue the exhaust (26) and induction (24) pipes and in the vicinity of a precombustion chamber (29) equipped with an injector (30) and a preheating spark plug (31).

4. Cylinder head according to claim 3, characterized in that the opening (25'a) for the passage of fixing screws adjacent to the lateral face (28), opposite to the face (27) on which issue the exhaust (26) and induction (24) pipes, is arranged with its axis following the diametral plane (D) perpendicular to the longitudinal plane (L) of the engine, in a position substantially symmetrical with respect to the axis of cylinder (22) from the position of the passage hole (25a) located in the space within the concavity of exhaust pipe (26).

5. Cylinder head according to claim 4, characterized in that the axis of the antechamber (29) is located along the diametral plane (D), the axis of the preheating plug (31) forming a certain angle $\alpha$ with said plane.

6. Cylinder head according to claim 4, characterized in that the axis of the antechamber (29) and the axis of the preheating plug (31) form the same angle $\beta$ with the diametral plane (D).

7. Cylinder head according to claim 4, characterized in that the axis of the antechamber (29) forms a first angle $\beta_1$ with the diametral plane (D) and the axis of the preheating plug (31) forms a second angle $\alpha_1$ with the axis of antechamber (29).

8. Cylinder head according to claim 1, characterized in that the axis of the screw passage opening (25'a) in the vicinity of the lateral face (28) of cylinder head (21) opposite to the lateral face (27) onto which issue the exhaust pipe (26) and induction pipes (24) is positioned outside the diametral plane (D) and in the vicinity of said plane and of a precombustion chamber (29) equipped with an injector (30) and a preheating spark plug (31).

9. Cylinder head according to claim 8, characterized in that the axis of the antechamber (29) and the axis of the preheating plug (31) form the same angle $\beta_2$ with the diametral plane (D).

10. Cylinder head according to claim 8, characterized in that the axis of antechamber (29) forms a first angle $\beta_3$ with the diametral plane (D) and the axis of the preheating plug (31) a second angle $\alpha_2 + \beta_3$ with said diametral plane (D).

11. Cylinder head according to claim 1, characterized in that the exhaust pipe (26) issues onto the lateral face (27) of the cylinder head where the induction pipes (24) also issue, in a position substantially perpendicular to one of the two induction pipes (24).

**Patentansprüche**

1. Zylinderkopf einer Brennkraftmaschine mit mehreren Zylindern, deren Achsen in einer Längsebene L liegen, wobei jeder Zylinder zwei Ansaugventile, die jeweils mit einer Ansaugleitung (24) zusammenarbeiten, und ein Auspuffventil umfaßt, das mit einer Auspuffleitung (26) zusammenarbeitet, die Ansaugleitungen (24) symmetrisch zueinander bezüglich einer diametralen Ebene D des Zylinders (22) senkrecht zur Längsebene L sind, die Auspuffleitung (26) an der gleichen Seitenfläche (27) des Zylinderkopfes (21) wie die Ansaugleitungen (24) und auf einer Höhe in der Mitte zwischen der Höhe der Ansaugleitungen (24) und der Verbindungsebene (1a) des Zylinderkopfes münden und der Zylinderkopf (21) am Maschinenblock auf der Höhe jedes Zylinders (22) über eine Gruppe von Schrauben befestigt ist, die um dem Zylinder (22) herum verteilt sind, dadurch gekennzeichnet, daß die Auspuffleitungen (26) an der Seitenfläche (27) des Zylinderkopfes an Stellen münden, die seitlich bezüglich der diametralen Symmetrieebene D der entsprechenden Ansaugleitungen (24) versetzt sind, die Auspuffleitungen (26) Achsen (26a) haben, deren Projektion auf eine Ebene parallel zur Verbindungsebene (1a) des Zylinderkopfes eine gekrümmte Form hat und mit ihrer Konkavität zur diametralen Ebene D gewandt ist und ein Durchgangsloch (25a) für eine Befestigungsschraube des Zylinderkopfes in der Nähe der Seitenfläche (27) mit seiner Achse in der diametralen Ebene D im Raum im Inneren der Konkavität der Auspuffleitung (26) angeordnet ist.

2. Zylinderkopf nach Anspruch 1, dadurch gekennzeichnet, daß er sieben im wesentlichen regelmäßig um jeden Zylinder (22) verteilte Schraubendurchgangslöcher umfaßt, von denen sich ein Loch (25a) in der Konkavität der Auspuffleitung (26) befindet, und zwei Löcher (25b, 25c) andererseits in der diametralen Ebene D in der Nähe der Seitenfläche (28) des Zylinderkopfes angeordnet sind, die der Fläche (27) gegenüberliegt, an der die Auspuffleitungen (26) und die Ansaugleitungen (24) münden.

3. Zylinderkopf nach Anspruch 1, dadurch gekennzeichnet, daß er sechs Durchgangslöcher für Befestigungsschrauben umfaßt, die im wesentlichen regelmäßig um jeden Zylinder (22) herum verteilt sind, von denen ein Loch (25'a) in der Nähe der Seitenfläche (28), die der Fläche (27) gegenüberliegt, an der die Auspuffleitungen (26) und die Ansaugleitungen (24) münden, und nahe an einer Verbrennungsvorkammer (29) angeordnet ist, die mit einer Einspritzer (30) und einer Glühkerze (31) versehen ist.

4. Zylinderkopf nach Anspruch 3, dadurch gekennzeichnet, daß das Loch (25'a) für den Durchgang einer Befestigungschraube in der Nähe der Seitenfläche (28), die der Fläche (27) gegenüberliegt, an der die Auspuffleitungen (26) und die Ansaugleitungen (24) münden, mit seiner Achse in der diametralen Ebene D senkrecht zur Längsebene L der Maschine an einer Stelle angeordnet ist, die bezüglich der Achse des Zylinders (22) im wesentlichen symmetrisch zu der Stelle des Durchgangsloches (25a) ist, das im Raum im Inneren der Konkavität der Auspuffleitung (26) angeordnet ist.

5. Zylinderkopf nach Anspruch 4, dadurch gekennzeichnet, daß die Achse der Vorkammer (29) in der diametralen Ebene D liegt, und die Achse der Glühkerze (31) einen gewissen Winkel $\alpha$ mit dieser Ebene einschließt.

6. Zylinderkopf nach Anspruch 4, dadurch gekennzeichnet, daß die Achse der Vorkammer (29) und die Achse der Glühkerze (31) den gleichen Winkel $\beta$ mit der diametralen Ebene D einschließen.

7. Zylinderkopf nach Anspruch 4, dadurch gekennzeichnet, daß die Achse der Vorkammer (29) einen ersten Winkel $(\beta_1)$ mit der diametralen Ebene D einschließt und daß die Achse der Glühkerze (31) einen zweiten Winkel $(\alpha_1)$ mit der Achse der Vorkammer (29) einschließt.

8. Zylinderkopf nach Anspruch 1, dadurch gekennzeichnet, daß die Achse des Schraubendurchgangsloches (25'a), das in der Nähe der Seitenfläche (28) des Zylinderkopfes (21) angeordnet ist, die der Seitenfläche (27) gegenüberliegt, an der die Auspuffleitung (26) und die Ansaugleitungen (24) münden, außerhalb der diametralen Ebene D, in der Nähe dieser Ebene und in der Nähe einer Vorverbrennungskammer (29) angeordnet ist, die mit einem Einspritzer (30) und einer Glühkerze (31) ausgerüstet ist.

9. Zylinderkopf nach Anspruch 8, dadurch gekennzeichnet, daß die Achse der Vorkammer (29) und die Achse der Glühkerze (31) den gleichen Winkel $(\beta_2)$ mit der diametralen Ebene D einschließen.

10. Zylinderkopf nach Anspruch 8, dadurch gekennzeichnet, daß die Achse der Vorkammer (29) einen ersten Winkel $\beta_3$ mit der diametralen Ebene D einschließt, und daß die Achse der Glühkerze (31) einen zweiten Winkel $(\alpha_2 + \beta_3)$ mit der diametralen Ebene D einschließt.

11. Zylinderkopf nach Anspruch 1, dadurch gekennzeichnet, daß die Auspuffleitung (26) an der Seitenfläche (27) des Zylinderkopfes mündet, wo gleichfalls die Ansaugleitungen (24) münden, und zwar an einer Stelle, die im wesentlichen senkrecht zu einer der beiden Ansaugleitungen (24) liegt.

FIG.2

FIG.1

FIG.3

FIG.4

FIG.5

FIG.6

3

## FIG.7

21

30

35

25'α

29

## FIG.8

24

31

26

γ

D

D

25'α

29

24

25α

4

FIG.9

FIG.10

# FIG.11

# FIG.12